# EUROPÄISCHE PATENTSCHRIFT

(11) **EP 3 203 827 B1**
(45) Veröffentlichungstag und Bekanntmachung des Hinweises auf die Patenterteilung: **02.01.2019**
(21) Anmeldenummer: 15813248.0
(22) Anmeldetag: 06.10.2015
(51) Int. Cl.: A01F 12/44, A01D 41/08, A01D 45/04, A01D 41/06

(54) **ÄHRENSTRIPPER; ERNTEVORRICHTUNG**
EAR STRIPPER; HARVESTING DEVICE
DISPOSITIF À ENLEVER DES ÉPIS; DISPOSITIF DE RÉCOLTE

(30) Priorität: 06.10.2014 DE 102014014871
(43) Veröffentlichungstag der Anmeldung: 16.08.2017
(73) Patentinhaber: Fink, Lucian Andrej, 73230 Kirchheim/Teck (DE)
(72) Erfinder: Fink, Lucian Andrej, 73230 Kirchheim/Teck (DE)
(74) Vertreter: Müller, Thomas
(86) Internationale Anmeldenummer: PCT/DE2015/000508
(87) Internationale Veröffentlichungsnummer: WO 2016/055049

(56) Entgegenhaltungen:
- EP-A1- 0 346 342
- DE-T2- 3 587 945
- DE-T2- 3 854 083
- DE-T2- 69 009 723
- DE-T2- 69 109 659
- DE-T2- 69 523 504
- EA-A1- 200 900 219
- GB-A- 2 200 526
- GB-A- 2 219 919
- JP-A- 2012 000 084
- US-A- 4 991 385

## Beschreibung

### Stand der Technik

Die Erfindung geht aus von einer Erntevorrichtung zur Getreide-, Reis-, Körner-, Samenernte odgl., die im Front-, Seiten- oder Heckanbau betrieben wird, nach der Gattung des Anspruchs 1.

Ährenstripper, wie sie in der Patentanmeldung GB 2 200 526 A und dem Patent US 4 991 385 A offenbart sind, streifen mit einer Finger- oder Kammleiste Erntegut von den Halmen und Ähren ab. Eine verstellbare Haube drückt das Erntegut nieder und führt es dem Ährenstripperrotor zu. Diese schwere, undurchsichtige Haube aus Stahlblech verhindert das Erntegutes weggeschleudert wird und sorgt für den Gut-Fluss zu weiteren Fördervorrichtungen. Durch dieses Verfahren wird eine deutlich höhere Durchsatzleistung des Mähdreschers als mit einem herkömmlichen Vorsatzschneidwerk erzielt, da Nicht-Korn-Bestandteile nur geringfügig in die Maschine gelangen und bereits ein bestimmter Anteil Körner, Samen durch den Abstreifprozess abgeschieden wird. Ährenstripper verlängern das Erntefenster, da sie unabhängiger von der Strohfeuchte arbeiten. Sie können aber nicht in allen Kulturen eingesetzt werden. Jedoch haben die geeigneten Kulturen meist den höchsten Anteil in der Fruchtfolge. Anschließend wird das Erntegut einem engeren sich im Mähdrescher befindenden Kanal zugeführt. Dort sind Dreschvorrichtungen eingebaut die mit Trommeln, Rotoren die Körner aus dem Erntegutstrom ausdreschen, schlagen, reiben, zentrifugieren odgl. und durch einen Dreschkorb, Schüttler abscheiden. Durch eine Wind- und Siebreinigung werden im Siebkasten eines Mähdreschers die Nicht-Korn-Bestandteile vom Erntegut getrennt und abgeschieden. Schüttgutförderer fördern das gereinigte Erntegut weiter. Nachteilig ist, dass die Schichtdicken im Dresch-, Abscheide-, Reinigungskanal hoch sind, was den Prozess erschwert. Das Erntegut muss zudem einen weiten umgelenkten Weg im Erntevorsatz und der Erntemaschine zu den Dresch-, Abscheide- Reinigungsvorrichtungen zurücklegen, wodurch das Gewicht, die Komplexität dieser steigt und der Kraft-, Energiebedarf durch viele Antriebe hoch ist.

Bevorzugt soll der Stroh-, Nicht-Korn-Bestandteile-Gutstrom im Schwad oder gehäckselt wieder auf dem Feld gleichmäßig verteilt werden, was auf Grund der Arbeitsbreite, Wind und anderen Faktoren sehr schwierig ist und einen hohen Kraftbedarf erfordert. Dies erschwert oft folgende ackerbauliche Maßnahmen.

Ein bekannter Ährenstripperrotor ist kompliziert aufgebaut. Des Weiteren besitzt ein Ährenstripper-Erntevorsatz keinen eigenen Antrieb oder Dresch-, Abscheide-, Reinigungs- und Bunkersysteme. Fahrwerke, Stützräder dienen zur Bodenanpassung, Entlastung und zum Transport von Erntevorsätzen.

Ein Mähdrescher mit Erntevorsatz, der viel Kapital und Energie bindet, ist komplex aufgebaut, groß, schwer, unhandlich und des Weiteren nur für eine kurze Zeit des Jahres einsetzbar. Traktoren und selbstfahrende Trägerfahrzeuge sind im Gegensatz dazu vielseitig, ganzjährig nutzbare landwirtschaftliche Fahrzeuge. Sie bieten eine ideale Kraftquelle und Anbauräume für Maschinen und Geräte. Effizienz, Einfachheit, Zuverlässigkeit, Robustheit, Reparaturfreundlichkeit und ein geringer Wartungsaufwand der Erntemaschinen werden gefordert, um das Erntefenster optimal auszunutzen.

### Die Erfindung und ihre Vorteile

Die erfindungsgemäße Erntevorrichtung, mit den Merkmalen des Anspruchs 1, hat demgegenüber den Vorteil, dass durch deren einfache, robuste Bauweise effiziente, übersichtliche Geräte mit hoher Durchsatzleistung zur Verfügung gestellt werden.

Die erfindungsgemäße Erntevorrichtung insbesondere für Getreide, Reis, Samen, Körner, die von einem landwirtschaftlichen Fahrzeug betrieben wird, um eine sehr hohe Durchsatzleistung effizient zu erzielen, ist bevorzugt modular aufgebaut. Neben dem Abstreifer, einer geneigten Rutsche, der Dresch-, Abscheidevorrichtung, dem Reinigungsluftkanal sind bevorzugt erforderliche Luftstromerzeuger, Bunker-, Fördervorrichtungen, sowie Systeme zum Schneiden oder Zerkleinern und Prozessvorrichtungen auf ein Minimum reduziert und komplett im Erntevorsatz über die gesamte und/oder nahezu gesamte Arbeitsbreite installiert. Ein angebautes Fahrwerk unterstützt und entlastet die Erntevorrichtung bei Feld- und Transportarbeiten.

Weitere Vorteile und vorteilhafte Ausgestaltungen der Erfindung sind der nachfolgenden Beschreibung, den Ansprüchen und der Zeichnungen entnehmbar.

### Zeichnungen

Bevorzugte Ausführungsbeispiele des erfindungsgemäßen Gegenstands sind in den Zeichnungen dargestellt und werden im Folgenden näher erläutert. Es zeigen
- Figur 1: eine Seitenansicht einer erfindungsgemäßen Erntevorrichtung,
- Figur 2: eine Seitenansicht (linke Seite) eines Ährenstripperrotors mit einer verstellbaren Nasenhaube und eine Draufsicht (rechte Seite) auf eine Nasenhaube,
- Figur 3: eine Vorderansicht einer erfindungsgemäßen Erntevorrichtung,
- Figur 4: eine schematische Darstellung einer Draufsicht auf eine erfindungsgemäßen Erntevorrichtung in Schubfahrt vor einem Traktor mit angehängtem Bunker (verkleinert dargestellt) und
- Figur 5: eine perspektivische Darstellung einer erfindungsgemäßen Erntevorrichtung (ohne Nasenhaube und Verkleidungen).

### Beschreibung des Ausführungsbeispiels

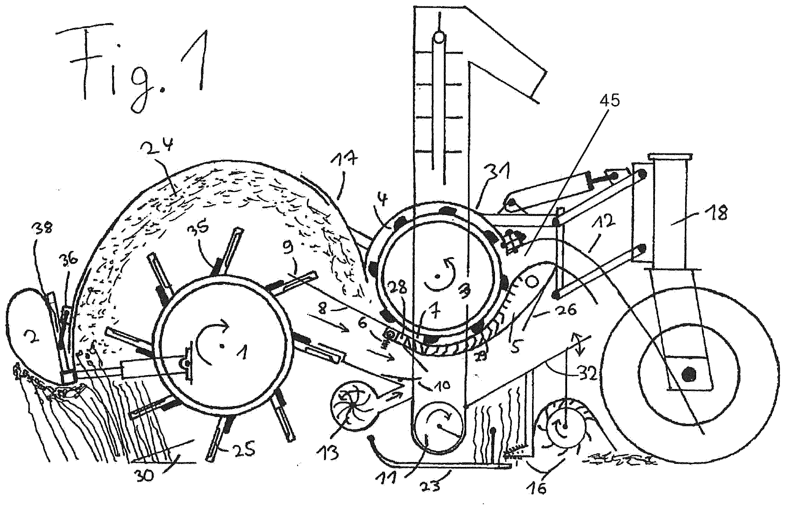

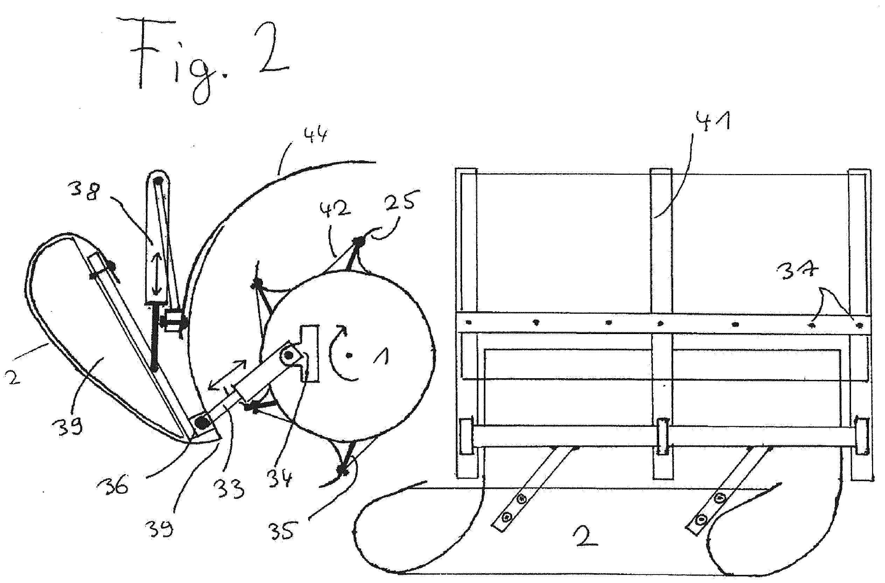

Figur 1 zeigt eine Seitenansicht einer erfindungsgemäßen Erntevorrichtung und Figur 2 eine Seitenansicht (linke Seite) eines Ährenstripperrotors 1 mit einer verstellbaren Nasenhaube 2, 44 und eine Draufsicht (rechte Seite) auf eine Nasenhaube 2. In Fahrtrichtung vorwärts wird Erntegut 24 von einer in der Höhe verstellbaren Nasenhaube 2 niedergedrückt. Die Nasenhaube 2, 44 und alle weiteren Abdeckungen, wie z.B. ein Spritzschutz/Staubtuch 12, eine Klappe 17, eine Maschinenverkleidung 31, sind bevorzugt aus leichtem, flexiblem, durchsichtigem, durchschlagsfestem, schlagzähem, selbstversteifenden, antistatischen, UV-beständigen Kunststoff, insbesondere Polycarbonat-Kunststoff, vorzugsweise Makrolon, Lexan Margard, ausgeführt. Diese Flexibilität ermöglicht es, die Haubenform einfach auszuführen. Durch die Anpassung der Haube an Radien, Kurven und Krümmungen versteift sie sich selbst. Vorzugsweise ist die Nasenhaube 2, 44 an Vierkantprofilen (Haubenvierkantprofile 36), Rohren odgl., die formstabil über große Arbeitsbreiten sind, mittels Schraubenbolzen 37 befestigt. Verstellbare teleskopierbare Arme (Teleskoparme 33), die an Kugellagern 34 aufgehängt sind, ermöglichen mit einem Hub-, Senkmechanismus 38 eine optimale Anpassung der verstellbaren Nasenhaube 2 an die Erntebedingungen. Der untere verstellbare Teil der Nasenhaube 2 liegt durch die Spannung des Kunststoffes, insbesondere des Polycarbonat-Kunststoffes, eng an der oberen fixierten Nasenhaube 44 innen verstellbar an, wodurch eine optimale gleitende Haubenverstellung und ein bestmöglicher Gutfluss des Erntegutes 24 gewährleistet werden. Eine Abkantung 40 der Haube, vorzugsweise um 90 Grad, winkelt die Nasenhaube 2 nach vorne in ihre gerollte Form ab. Formschlüssige Nasenstützelemente 39 erhöhen die Steifigkeit der Haube. Durch eine Haubenauflage/Laufbahn 41 liegt die Nasenhaube 2, 44 auf dem Rahmen der Erntevorrichtung auf und kann auf ihr fixiert oder nach oben und unten bewegt werden. Im Arbeitseinsatz bei Nacht werden die Nasenhauben 2, 44 und Abdeckungen, wie z.B. ein Spritzschutz/Staubtuch 12, eine Klappe 17, eine Maschinenverkleidung 31, von innen und/oder außen beleuchtet, um dem Bediener jederzeit eine optimale Sicht auf die Vorrichtungen zu ermöglichen. Somit kann die Maschineneinstellung optimiert und Schäden oder Fremdkörper schnell erkannt werden.

Der in seiner Drehzahl verstellbare Ährenstripperrotor 1 rotiert im Uhrzeigersinn und ist vorzugsweise aus einem Rohrprofil, welches eine hohe rotierende Formstabilität, gute Bearbeitungs-, Fertigungs-, Wuchteigenschaften und den benötigten Grundkörper, vorzugsweise zwischen 250 - 500 mm, aufweist, gebaut. Der Rohrzylinder weist winkelig 10 - 30 Grad nach oben von der Waagerechten der Rohrachse im Dreh-, Rotationspunkt der Seitenansicht (Figur 1) am äußeren Rand des Rohrkörpers angeschweißte Tragelemente 35, vorzugsweise Flacheisen, an denen die Ährenstripperfinger 25 (Leisten) mittels Schraubbolzen angeordnet sind, auf. Die Abstreiferfinger (Ährenstripperfinger 25) greifen ins Erntegut 24 und streifen die Ähren, Körner, Samen odgl. von den Halmen ab. Die Ährenstripperfinger 25 weisen vorzugsweise eine Schlitzform, die in einem Radius mündet, mit Muldenvertiefung nach unten (Figur 1, 25), die ein Wegspritzen der Körner, Samen nach vorne verhindert, auf. Sie können gerade ausgeführt sein und/oder halbrund als C-Profil 25 (Figur 2) mittels eines geteilten Rohres, Bleches oder Kunststoffes gefertigt werden. Im Lagergetreide können montierte Ährenheber 30 das Erntegut 24 anheben und den jeweiligen Abstreiferschlitzen zuführen. Das Korn/Nicht-Korn-Bestandteile Gemisch wird durch die Nasenhaube 2, 44, dem Schwung des Abstreifeprozesses, dem Luftstrom des Ährenstripperrotors 1 mittels einer Fingerrutsche (Fingerkamm- (9) - rutsche, Rutsche 8) direkt von oben entzerrt, beschleunigt, tangential zwischen eine Dreschvorrichtung 3, die Schlag-, Reibleisten 4 aufweist, und eine Abscheidevorrichtung 5 befördert. Die Rutsche 8 ist antistatisch mit sehr guten Gleiteigenschaften ausgeführt. Sie kann in Ihrer Neigung (vorzugsweise größer 20 Grad) verstellt und somit dem jeweiligen Erntegut 24 und Arbeitsbedingungen angepasst werden. Dadurch wird eine ausreichende Zuführungshöhe der Dresch-, Abscheidevorrichtung erreicht, die Platz für eine intensive Reinigung, Schüttguttransport und Bunkerraum darunter bietet. Alternativ besteht die Möglichkeit, eine Transportvorrichtung zu installieren, die das Erntegut 24 der Dreschvorrichtung 3 zuführt.

Durch das bereits teilweise durch den Ährenstripperrotor 1 ausgedroschene Gemisch und die Zuführung zur Dreschvorrichtung 3, 4 über z.B. die gesamte Arbeitsbreite wird eine geringe Schichtdicke in den Dresch-, Abscheidungs-, Reinigungsorganen erzielt. Damit ist die Dresch-, Reinigungs- und Abscheideleistung erhöht, woraus eine sehr hohe Durchsatzleistung der Erntevorrichtung erzielt wird.

Durch einen entleerbaren Fremdkörperabscheider, der eine Fremdkörperauffangmulde 28 aufweist und der vor dem Vorabscheider 7 und dem Abscheidekorb (Abscheidevorrichtung, Dreschkorb 5) angebracht ist, werden die Dresch-, Abscheidungs-, Reinigungsvorrichtungen vor Beschädigungen geschützt.

Durch einen einbaubaren Vorabscheider 7, der direkt im vorderen Teil mit der Abscheidevorrichtung 5 verbunden ist, können bereits abgestreifte Körner direkt der Reinigungsvorrichtung, im Reinigungsluftkanal, der mit Pfeilen in den Figuren gekennzeichnet ist, unterhalb der Dresch-, Abscheidevorrichtung zugeführt werden. Dadurch wird eine mögliche Schädigung des Korns durch die Dreschvorrichtung 3 und der Abscheidevorrichtung 5 verhindert. Dieser kann geschlossen werden, um das gesamte Erntegut 24 in die Dreschvorrichtung 3 zu fördern, wenn es erforderlich ist.

Die in ihrer Drehzahl verstellbare Dreschvorrichtung 3 ist als Schlagleistentrommel, Rohr oder Zylinder mit aufgebrachten Schlag-, Reibleisten 4 ausgeführt. Die Schlag-, Reibleisten der Dreschvorrichtung erfassen den Erntegutstrom tangential. Sie können als elastische Schlag-, Reibleisten 4 aus Gummi, Kautschuk oder Bürsten ausgeführt sein, um den Bruchkornanteil zu minimieren. Die Schlag-, Reibleisten 4 können mittels Halterungen und Schrauben befestigt oder aufvulkanisiert werden. Die Drehrichtung ist entgegen des Uhrzeigersinns. Durch die Schlag-, Reibwirkung werden die restlichen Körner ausgedroschen und mittels Zentrifugalkräfte der Rotation durch die Abscheidevorrichtung 5 über nahezu die gesamte und/oder die gesamte Arbeitsbreite nach unten in den Reinigungs-, Luftkanal (Pfeile) abgeschieden. Durch den Vordrusch des Abstreiferrotors (Ährenstripperrotors 1) kann die Dreschvorrichtung klein und leicht ausgeführt werden, wodurch eine hohe Zentrifugalbeschleunigung/kraft zur Abscheidung des Erntegutes 24 erzielt wird.

Der für den Getreidedrusch installierte Getreidedreschkorb (Abscheidevorrichtung, Dreschkorb 5) kann mit der Dreschvorrichtung 3 und deren Schlag-, Reibleisten 4 auch durch eine Stiften-Dresch-, Abscheidevorrichtung für den Reisdrusch oder anderen Erntekulturen ausgetauscht werden. Letztere kann als Draht-, Lochkorb oder Sieb ausgeführt sein. Elastische Korbleisten können den Bruchkornanteil im Ernteprozess mindern.

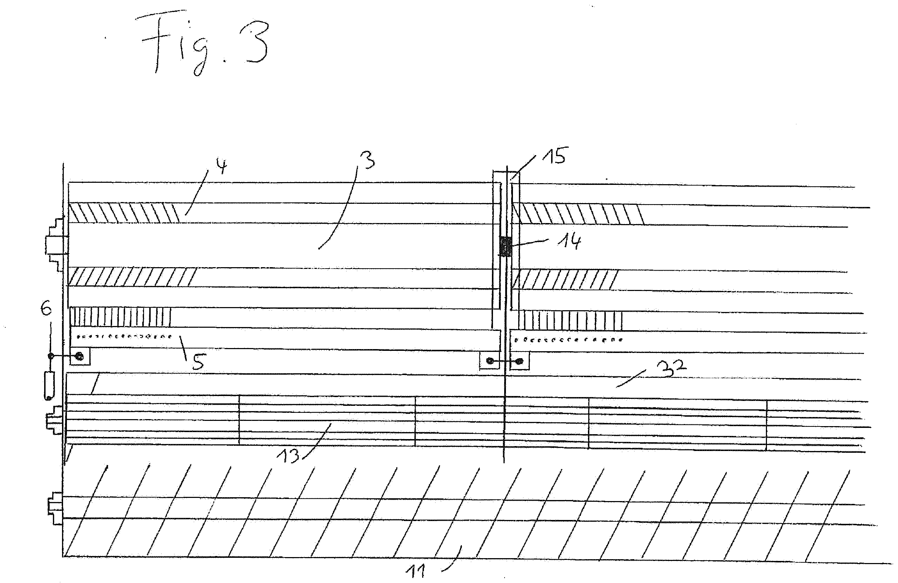

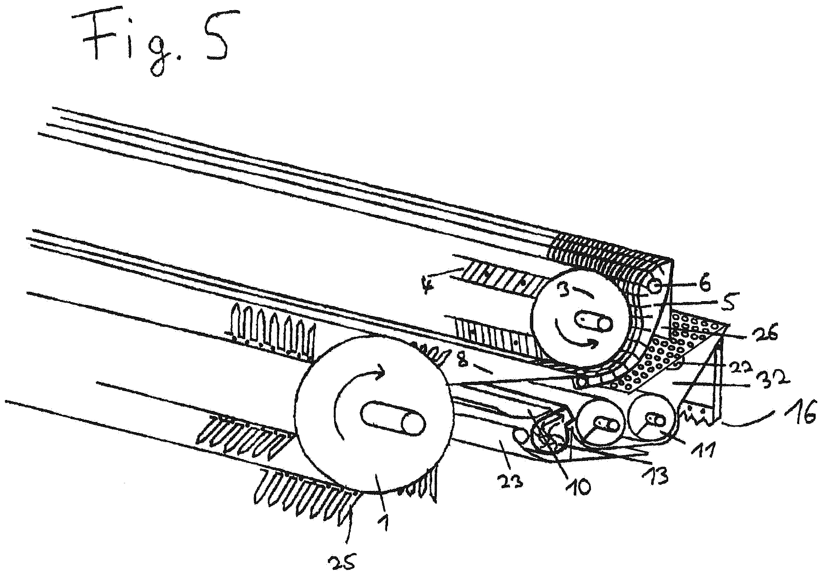

Erntegutstrombremsklappen 29, die unterhalb der Abscheidevorrichtung 5 eingebaut sind, verzögern die Fallgeschwindigkeit des Erntegutes 24 nach unten im Reinigungsluftkanal (Pfeile), was die Intensität der Reinigung fördert, da die Bestandteile länger in der Fallstufe mit Luft beaufschlagt werden. Die Öffnungsweite der Abscheidevorrichtung 5 ist so gestaltet, dass bereits eine erste Reinigung eingeleitet wird, da dadurch wenig Nicht-Korn-Bestandteile nach unten abgeschieden werden können. Im Dreschspalt werden die Nicht-Korn-Bestandteile durch die Rotation der Dreschvorrichtung 3 gegen den Uhrzeigersinn nach hinten in einen Spritzschutz/Staubtuch 12 abgeführt. Es wird durch die Zuführung mittels der Rutsche 8 mit Fingerkamm 9 von oben und den Auswurf des Erntegutes 24 konstruktiv ein großer Umschlingungswinkel der Abscheidevorrichtung 5 erreicht. Weitere drusch-fördernde (Intensivreibleiste) oder druschmindernde Elemente (Korbabdeckungen) können je nach Einsatzbedingungen in und/oder an die Abscheidevorrichtung 5 gebaut werden. Die Drehzahl der Dreschvorrichtung 3 sowie der Dreschspalt zwischen der Abscheidevorrichtung 5 können durch einen Abscheidevorrichtungs-Verstellmechanismus 6 verstellt werden. Vorzugsweise ist die Abscheidevorrichtung 5 hinten mittels eines durchgehenden Rohrkörpers sektionsweise und an den Enden in drehbaren Kugellagern (Figur 5, Abscheidevorrichtungsverstellmechanismus 6) über den überwiegenden Teil oder die gesamte Arbeitsbreite aufgehängt. Durch den Radius der definierten Kreisbahn zum vorderen Abscheidevorrichtungs-Verstellmechanismus 6 (Figuren 1, 3), wobei die Abscheidevorrichtung 5 in diesem Punkt ebenfalls mittels eines durchgehenden Rohres befestigt ist, kann diese mittels Augenschrauben 6 (Figur 1), Zylindern und/oder ähnlichen Mechanismen nach unten geöffnet und/oder nach oben geschlossen werden. Ein Körnerspritzschutz 26 verhindert hinter der Abscheidevorrichtung 5, dass z.B. Körner, Samen aus der Erntevorrichtung geschleudert werden.

Das ausgedroschene Erntegut 24 (Nicht-Korn-Bestandteile) verlässt die Abscheidevorrichtung 5 nach hinten und wird mit dem Staub über einen Spritzschutz/Staubtuch 12 gleichmäßig über die gesamte oder nahezu gesamte Arbeitsbreite der Erntevorrichtung auf dem Boden verteilt. Dieses ist eng an der Dreschvorrichtung angebracht, um einen Überwurf der Nicht-Korn-Bestandteile zu verhindern. Dem Bediener wird somit jederzeit eine optimale Sicht auf die Erntevorrichtung zu gewährt. Eine Auswurftrommel 45 kann eingebaut werden.

Bevorzugt weist die erfindungsgemäße Erntevorrichtung einen Ährenstripperrotor 1, der einen Luftstrom erzeugt, und/oder eine Luftstromerzeugungsvorrichtung 13 auf.

Die geschlossene und/oder perforierte Rutsche 8, welche direkt mit der Fremdkörperauffangmulde 28 und/oder dem Vorabscheider 7 und/oder der Abscheidevorrichtung 5 verbunden ist, und der Fingerkamm 9 sind fest miteinander verbunden und bilden das Gegenstück zu den Ährenstripperfingern 25, die am Ährenstripperrotor 1 angeordnet sind. Sie greifen in diese Ährenstripperfingern 25 ein und schließen den Abstreifeschlitz der Ährenstripperfingern 25. Somit wird überworfenes Erntegut 24 zur Dresch- 3, 4 und Abscheidevorrichtung 5 geleitet und der Luftstrom vom Rotor stärker in Richtung unterhalb des Dreschkorbes 5 zu den Reinigungsvorrichtungen geleitet. Der Ährenstripperrotor-Luftstrom kann unterhalb der Rutsche 8 unter den Dreschkorb 5 in den Luftkanal (Pfeile) über eine verstellbare Luftleitklappe 10 geführt werden, oder der Luftstrom wird durch die perforierte Rutsche 8 und den Öffnungen der Abscheidevorrichtung 5 nach unten in den Reinigungsluftkanal oder den Luftstromerzeuger 13 geleitet. Die Öffnungen der perforierten Rutsche 8 sind so gestaltet dass nur der Luftstrom nach unten entweichen kann und sie den Gutfluss nicht behindern. Durch die Luftleitklappen 10 kann der Luftstrom variabel in seiner Intensität und alle Richtungen unterhalb des Dreschkorbes 5 geleitet werden. Der Luftstrom erfasst die Nicht-Korn-Bestandteile (Kaff), die durch die Abscheidevorrichtung 5 mit abgeschieden werden, und bläst sie über den überwiegenden Teil der Arbeitsbreite oder die gesamte Arbeitsbreite nach hinten vor den Spritzschutz/Staubtuch 12 auf den Boden.

Der Luftstromerzeuger 13 ist bevorzugt über den überwiegenden Teil der Arbeitsbreite oder die gesamte Arbeitsbreite angeordnet, um den Ährenstripperrotorluftstrom bei der Reinigung zu unterstützen und Nicht-Korn-Bestandteile im Reinigungsluftkanal (Pfeile) unterhalb der Abscheidevorrichtung 5 nach hinten in den Spritzschutz/Staubtuch 12 auszublasen. Der Luftstromerzeuger 13 ist vorzugsweise als Tangentialgebläse, Querstromlüfter oder ähnlichem ausgeführt. Zur Anpassung der Luftmenge und Luftgeschwindigkeit ist der Luftstromerzeuger 13 in seiner Drehzahl verstellbar. Die Ansaugung der Luft kann von allen Seiten erfolgen. Die Möglichkeit besteht, den Luftstromerzeuger unter einer Schüttguttrogrutsche 32 einzubauen. Von dort wird der Luftstrom unterhalb des Schüttgutförderers 11 mittels eines Kanales über den überwiegenden Teil der Arbeitsbreite oder die gesamte Arbeitsbreite in Fahrtrichtung geblasen und mittels eines Leitbleches (Luftleitklappe 10) in die Fallstufe der Reinigung zum Ausblasen der Nicht-Korn-Bestandteile nach hinten geleitet. Durch das Öffnen einer optionalen Klappe 17 kann durch den Luftstrom vom Ährenstripperrotor 1 ein Teil der Nicht-Korn-Bestandteile vor der Dreschvorrichtung 3 abgeschieden werden. Diese Klappe 17 ist auch als Wartungsklappe vorgesehen.

Durch den Einbau einer kurzen in ihrer Neigung, deren Winkel vorzugsweise über 30 Grad beträgt, verstellbaren antistatischen Schüttguttrogrutsche 32 mit guten Gleiteigenschaften, die über den überwiegenden Teil der Arbeitsbreite oder die gesamte Arbeitsbreite angeordnet ist, kann das gereinigte Erntegut 24 auf dieser zum Schüttgutförderer 11 rutschen. Eine in ihrer Neigung verstellbare ähnliche Rutsche kann auch in kürzerer Ausführung oberhalb der Schüttguttrogrutsche 32 eingebaut werden. Diese kann vom Luftstrom angeblasen werden. Das Erntegut 24 wird beim Hinabgleiten länger mit Luft beaufschlagt, was die Reinigungsintensität fördert. Nach hinten abgetriebene Körner, Samen fallen durch einen Spalt am Ende der Rutsche auf die Schüttguttrogrutsche 32, da sie schwerer als die Nicht-Korn-Bestandteile sind.

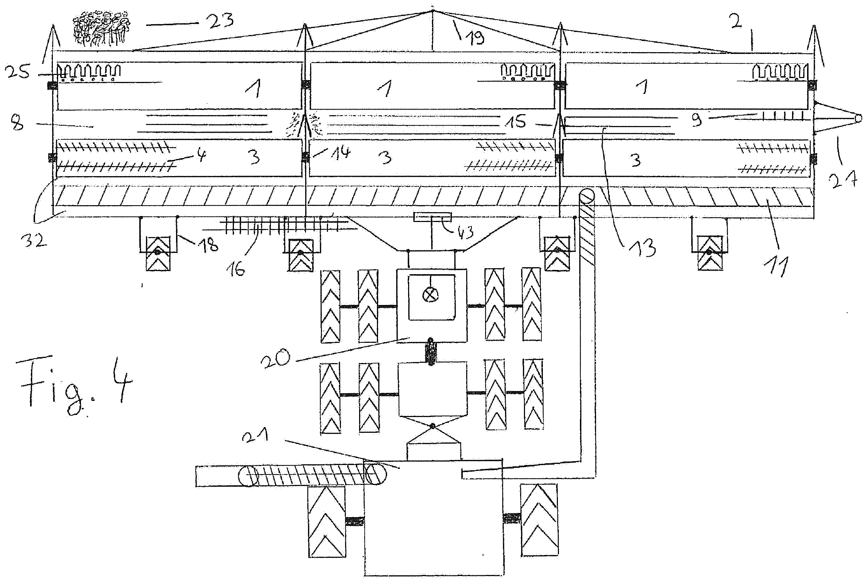

Bevorzugt befindet sich der bevorzugt über den überwiegenden Teil der Arbeitsbreite oder die gesamte Arbeitsbreite der Erntevorrichtung eingebaute Schüttgutförderer 11 mit Erntegutbunker unterhalb der Abscheidevorrichtung 5 und der Schüttguttrogrutsche 32. Das Erntegut 24 (Körner, Samen odgl.) fällt gereinigt in den Schüttgutförderersumpf und wird durch den Schüttgutförderer 11 zu einer entsprechenden Bunkereinheit (Fig. 4, Anhänger 21) gefördert, oder Elevatorköpfe gekoppelt an den Schüttgutförderer 11 (Figur 1) links und rechts der Erntevorrichtung ermöglichen ein seitliches Entladen auf ein Transportfahrzeug.

Wenn bei der Erntevorrichtung die Dresch-, Reinigungs-, Fördervorrichtung etwas schmäler gebaut sind, als die Abstreifervorrichtung können die Elevatorköpfe in die äußeren Zwischenräume gebaut werden. Dadurch wird kein Erntegut 24 seitlich im Bestand niedergedrückt. In diesem Fall führen Leitbleche links und rechts das Erntegut 24 vom Abstreiferrotor der Dreschvorrichtung und Abscheidevorrichtung seitlich zu. Durch Abschalten des Schüttgutförderes 11 wird der Schüttgutfördersumpf als Zwischenspeicher und/oder Bunker für das gereinigte Erntegut 24 genutzt. Durch die Neigung der Schüttguttrogrutsche 32 nach unten kann das Bunkervolumen vergrößert werden. Ein über der Schüttgutfördervorrichtung eingebautes Dach schützt diese vor dem Erntegutvolumen. Ist der Erntegutbunker voll, kann die Schüttguttrogrutsche 32 langsam angehoben werden, wodurch das gereinigte Erntegut 24 zum Schüttgutförderer 11 gleitet.

Figur 3 zeigt eine Vorderansicht einer erfindungsgemäßen Erntevorrichtung. Der Ährenstripperrotor, die Dresch-, Abscheide-, Reinigungs-, Schüttgutfördervorrichtungen werden bei großen Arbeitsbreite mittels Lager 14 zwischengelagert. Pfeilförmige geformte Erntegutteiler 15 führen das Erntegut 24 an den Rahmenplatten, Lagern 14, Gelenken, Setzstöcken, Rollen oder mittigen Antriebseinheiten vorbei, rechts und links dem Dreschorgan zu. Diese Maschinenelemente können die Rohrkörper abstützen. Dort sind die Abstreiferfingerleisten 25, Tragelemente 35 und Schlag-, Reibleisten 4 unterbrochen. Eine vorzugsweise ausgeführte zylindrische Rohrform des Ährenstripperrotors 1 und der Dreschvorrichtung 3 ermöglicht einen sehr formstabilen Rotationskörper, wodurch die jeweiligen Einheiten über eine große Arbeitsbreite eingebaut werden können, was Zwischenlagerungen (Lager 14) reduziert.

Figur 4 zeigt eine schematische Darstellung einer Draufsicht auf eine erfindungsgemäße Erntevorrichtung in Schubfahrt vor einem Traktor 20 mit angehängtem Bunker 21 (verkleinert dargestellt). Die in ihrer Höhe verstellbare über den überwiegenden Teil oder den gesamten Teil der Arbeitsbreite angeordnete Schnitt-, Zerkleinerungsvorrichtung 16 kann als oszillierendes Schnittwerkzeug oder rotierend ausgeführt sein. Sie ist vorzugsweise so weit hinten angeordnet, dass die Nicht-Korn-Bestandteile aus dem Reinigungsluftkanal (Pfeile) mit den Ernteresten auf dem Feld zerkleinert werden können. Die Nicht-Korn-Bestandteile können geborgen werden oder verbleiben als zerkleinerte und aufgespleiste Schicht auf dem Feld, was nachfolgende Bewirtschaftungsmaßnahmen fördert.

Figur 5 zeigt eine perspektivische Darstellung einer erfindungsgemäßen Erntevorrichtung (ohne Nasenhaube und Verkleidungen). Die Erntevorrichtung kann mit einem sich hin- und her bewegenden nach hinten schüttelnden Sieb (Körner/Samensieb/Rutsche 22), auf das, die das Erntegut 24 ausgedroschen aus der Abscheidevorrichtung (5) fällt, ausgeführt sein. Diese(s) wird vom Luftstrom von unten angeblasen und scheidet Nicht-Korn-Bestandteile nach hinten ab. Durch die geringe Zufuhr der Nicht-Korn-Bestandteile des Ährenstripperrotors 1 und der Verteilung des Erntegutes 24 über die Breite muss der Reinigungsvorrichtungsluftstrom nur wenige Nicht-Korn-Bestandteile ausblasen. Dies fördert die für die Vermarktung erforderliche Reinheit der Ware.

Die Erntevorrichtung kann auch ohne Reinigungsvorrichtung betrieben werden. Das Korn/Samen-Nicht-Korn-Bestandteile-Gemisch kann dann gesondert nachgereinigt werden, um die Nicht-Korn-Bestandteile als Biomasse, Tierfutter oder sonstigem zu verwerten.

Durch die lineare Anordnung der jeweiligen Vorrichtungen hinter- und/oder übereinander ist durch wenige drehende Teile der Erntevorrichtung ein einfacher kraftsparender, wartungsarmer Antrieb der Aggregate möglich. Daraus ergibt sich ein sehr kurzer linearer, effektiver, effizienter Prozessweg ohne Umlenkung für das Erntegut 24 über den überwiegenden Teil oder die gesamte Arbeitsbreite. Bevorzugt kann auch ein Ährenstripper zum Einsatz kommen, der mit mehr als einem, bevorzugt zwei, Ährenstripperrotoren ausgestattet ist.

Die Erntevorrichtung ist, da die Erntevorrichtung zumindest teilweise aus Modulen zusammengesetzt werden kann, modular einfach in Ihrer Breite erweiterbar, da die Module zwischen den Rahmenplatten odgl. identisch und/oder nahezu identisch sind.

Bevorzugt weist die erfindungsgemäße Erntevorrichtung ein direkt zugeordnetes Fahrwerk 18 auf, das in der Höhe verstellt werden kann und drehbar über der Radachse ausgeführt ist. Vorzugsweise ist es als Parallelogramm mit Hub-, Senkzylindern ausgeführt. Es trägt einen Hauptteil des Gewichtes der Erntevorrichtung. Mit Gleitkufen 23 dient es für die Höhenführung und der Bodenanpassung der Erntevorrichtung. Ein Drehkranz/Schwenkrahmen 43 ist der Erntevorrichtung zugeordnet. Dieser wird mit dem Rahmen ans Trägerfahrzeug 20 gekoppelt. Somit kann die Erntevorrichtung unabhängig vom Trägerfahrzeug dem Untergrund durch das Fahrwerk 18 und den Gleitkufen 23 folgen. Das Fahrwerk kann bei Bedarf mit Radmotoren angetrieben werden. Um Seitenkräfte aufzufangen und abzuleiten, wird ein Stahlseil/Kette 19 (Fig. 4) vom Mittelsteg zu den Seiten der Erntevorrichtung über der Erntekultur gespannt.

Die Erntevorrichtung kann entweder in Schubfahrt (Fig.4), gezogen oder seitlich auf dem Feld betrieben werden. Mit einem Antriebsfahrzeug in Form eines Traktor/Systemträger/Antriebseinheit 20 kann die Ernteplattform mechanisch, hydraulisch oder elektrisch angetrieben werden. Des Weiteren kann die Erntevorrichtung über einen eigenen aufgebauten Motor angetrieben werden. Angebaut an einen Mähdrescher kann dieser die Reinigung des Erntegutes 24 übernehmen und/oder als Bunkereinheit verwendet werden. Durch den Anbau an eine landwirtschaftliche Maschine mit einem automatischen Lenksystem besteht die Möglichkeit, die Erntevorrichtung auch für das controlled traffic, smart farming zu verwenden.

Die Erntevorrichtung kann auf einem separaten Transportwagen oder mittels einer angebauten Zugdeichsel 27 (Figur 4) und Stützrädern gegenüber dem Fahrwerk 18 in Längs-Fahrtrichtung transportiert werden. Die gesetzlichen Straßentransportbestimmungen werden dabei jederzeit eingehalten.

Nach der Abkopplung der Erntevorrichtung am Saisonende vom Antriebsfahrzeug kann dieses für weitere Arbeiten genutzt werden. Die kompakten Abmessungen ermöglichen eine einfache platzsparende Unterstellung.

Durch die Erntevorrichtung mit Fahrwerk, Ährenstripperrotor, geneigter Rusche, Dresch-, Abscheide-, Reinigungs-, Schnitt-, Zerkleinerungs-, Förder- und Bunkervorrichtungen über die gesamte und/oder nahezu gesamte Arbeitsbreite kann eine sehr hohe Durchsatzleistung in der für den Ährenstripper geeigneten Kulturen erzielt werden. Eine geringe Schichtdicke und kurze Prozesswege des Erntegutes 24 ohne Gutstromumlenkung im Arbeitseinsatz fördern den Ausdrusch- Abscheidungs- und Reinigungsprozess. Das gleichmäßige Verteilen der Nicht-Korn-Bestandteile über die gesamte Arbeitsbreite begünstigt nachfolgende Arbeiten und Feldkulturen. Geringe Fertigung-, Anschaffungs-, Energie- und Wartungskosten durch den einfachen robusten, linearen, transparenten Aufbau und Antrieb und die Verwendung eines Traktor/Systemträger/Antriebseinheit 20, der auch für andere Arbeiten einsetzbar ist, ermöglichen einen sehr effektiven, effizienten, schlagkräftigen, bedienerfreundlichen und umweltschonenden Ernteeinsatz.

### Bezugszahlenliste

- 1: Ährenstripperrotor
- 2: Nasenhaube
- 3: Dreschvorrichtung
- 4: Schlag-, Reibleisten
- 5: Abscheidevorrichtung, Dreschkorb
- 6: Abscheidevorrichtung-Verstellmechanismus
- 7: Vorabscheider
- 8: Rutsche
- 9: Finger/Kamm
- 10: Luftleitklappe
- 11: Schüttgutförderer mit Schüttgutsumpf, Bunker
- 12: Spritzschutz/Staubtuch
- 13: Luftstromerzeuger
- 14: Lager
- 15: Erntegutteiler
- 16: Schnitt-, Zerkleinerungsvorrichtung
- 17: Klappe
- 18: Fahrwerk
- 19: Stahlseil/Kette
- 20: Traktor/Systemträger/Antriebseinheit
- 21: Bunker/Anhänger
- 22: Körner/Samensieb/Rutsche
- 23: Gleitkufen
- 24: Erntegut
- 25: Ährenstripperfinger
- 26: Körnerspritzschutz
- 27: Zugdeichsel
- 28: Fremdkörperauffangmulde
- 29: Erntegutstrombremsklappe
- 30: Ährenheber
- 31: Maschinenverkleidung
- 32: Schüttguttrogrutsche
- 33: Teleskoparm
- 34: Kugellager
- 35: Tragelement, Flacheisen
- 36: Haubenvierkantprofile
- 37: Schraubenbolzen
- 38: Hub-, Senkmechanismus
- 39: Nasenstützelement
- 40: Abkantung
- 41: Haubenauflage/Laufbahn
- 42: Stützelement
- 43: Drehkranz/Schwenkrahmen
- 44: Obere fixierte Nasenhaube
- 45: Auswurftrommel

- Pfeile: - Reinigung/Luftkanal

## Patentansprüche

1. Erntevorrichtung zur Getreide-, Reis-, Körner-, Samenernte odgl., die im Front-, Seiten- oder Heckanbau betrieben wird,
- mit einem Ährenstripper, durch den die Arbeitsbreite vorgegeben wird,
- mit einer geneigten Rutsche (8),
- mit einer Dreschvorrichtung (3),
- mit einer Abscheidevorrichtung (5),
wobei der Ährenstripper einen Ährenstripperrotorluftstrom erzeugt, sich die geneigte Rutsche (8), die einen dem Ährenstripper zugewandten Rand und einen dem Ährenstripper abgewandten Rand, der tiefer als der dem Ährenstripper zugewandte Rand und der zwischen der Dreschvorrichtung (3) und der Abscheidevorrichtung (5) angeordnet ist, aufweist, die Dreschvorrichtung (3) und die Abscheidevorrichtung (5) über den überwiegenden Teil der Arbeitsbreite oder die gesamte Arbeitsbreite erstrecken,
**dadurch gekennzeichnet, dass** die Erntevorrichtung zur Reinigung des Erntegutes (24) einen von einem Luftstrom durchströmten Reinigungsluftkanal (Pfeile) umfasst, der sich ebenfalls über den überwiegenden Teil der Arbeitsbreite oder die gesamte Arbeitsbreite erstreckt, wobei der Ährenstripperrotorluftstrom durch den Reinigungsluftkanal strömt.

2. Erntevorrichtung, nach Anspruch 1,
**dadurch gekennzeichnet,**
**dass** die Rutsche (8) Finger (9) aufweist, geschlossen und/oder zumindest teilweise perforiert und/oder eine oszillierende Rutsche (8) ist.

3. Erntevorrichtung, nach Anspruch 1 oder Anspruch 2,
**dadurch gekennzeichnet,**
**dass** die Dreschvorrichtung (3) Schlag- und/oder Reibleisten (4) aufweist und/oder die Abscheidevorrichtung (5) mit einem Vorabscheider (7) eine Siebfunktion für Nicht-Korn-Bestandteile und/oder Erntegutstrombremsklappen (29) aufweist.

4. Erntevorrichtung, nach einem der vorhergehenden Ansprüche,
**dadurch gekennzeichnet,**
**dass** die Abscheidevorrichtung (5) einen Abscheidevorrichtung-Verstellmechanismus (6), eine Fremdkörperauffangmulde (28), einen Vorabscheider (7) und/oder einen Körnerspritzschutz (26) aufweist.

5. Erntevorrichtung, nach einem der vorhergehenden Ansprüche,
**dadurch gekennzeichnet,**
**dass** der Ährenstripper mindestens einen Rotor, der ein Rohrkörper ist, aufweist und/oder die Dreschvorrichtung (3) einen Rohrkörper aufweist.

6. Erntevorrichtung, nach einem der vorhergehenden Ansprüche,
**dadurch gekennzeichnet,**
**dass** der Reinigungsluftkanal einen Luftstromerzeuger (13) aufweist.

7. Erntevorrichtung, nach Anspruch 6,
**dadurch gekennzeichnet,**
**dass** der Luftstromerzeuger (13) in seiner Drehzahl verstellbar sind ist und/oder der Reinigungsluftkanal mindestens einen Fingerkamm, mindestens ein Leitblech, mindestens eine Luftleitklappe (10), mindestens ein Sieb (22) und/oder mindestens eine Rutsche (32) aufweist und das Sieb (22) eine hin- und hergehende / schüttelnde Bewegung nach hinten aufweist.

8. Erntevorrichtung, nach einem der vorhergehenden Ansprüche,
**dadurch gekennzeichnet,**
**dass** die Erntevorrichtung einen Schüttgutförderer (11), einen Schüttgutsumpf, eine Bunkereinheit, eine Schneid- und/oder eine Zerkleinerungsvorrichtung (16) aufweist, die sich über den überwiegenden Teil der Arbeitsbreite oder die gesamte Arbeitsbreite erstrecken.

9. Erntevorrichtung, nach einem der vorhergehenden Ansprüche,
**dadurch gekennzeichnet,**
**dass** eine Bunkereinheit ein Bunkervolumen aufweist und/oder eine in ihrer Neigung verstellbare Schüttguttrogrutsche (32) aufweist.

10. Erntevorrichtung, nach einem der vorhergehenden Ansprüche,
**dadurch gekennzeichnet,**
**dass** ein Ährenstripperrotor (1), die Dreschvorrichtung (3), die Abscheidevorrichtung (5), ein Luftstromerzeuger (13) und/oder ein Schüttgutförderer (11) mindestens eine Zwischenlagerung (14) aufweisen und/oder die Erntevorrichtung Erntegutteiler (15) aufweist.

11. Erntevorrichtung, nach einem der vorhergehenden Ansprüche,
**dadurch gekennzeichnet,**
**dass** die Erntevorrichtung ein Fahrwerk (18), Gleitkufen (23), Stützräder, einen Drehkranz/Schwenkrahmen (43) und/oder eine Zugdeichsel (27) aufweist.

12. Erntevorrichtung, nach einem der vorhergehenden Ansprüche,
**dadurch gekennzeichnet,**
**dass** der Ährenstripper ein Ährenstripper mit einer Nasenhaube (2) zur Getreide-, Reis-, Körner-, Samenernte odgl., ist, mit mindestens einem Rotor, an dem Ährenstripperfinger (25) und/oder Abstreifer-Leisten, an denen Ährenstripperfinger (25) angeordnet sind, angeordnet sind, wobei der Rotor oder mindestens einer der Rotoren ein Rohrkörper oder ein runder Rohrkörper ist.

13. Erntevorrichtung, nach Anspruch12,
**dadurch gekennzeichnet,**
**dass** die Nasenhaube (2, 44) an Haubenvierkantprofilen (36) oder Rohren befestigt ist und/oder die Nasenhaube (2) mittels Teleskoparmen (33) und drehbaren Kugellagern (34)und einem Hub-, Senkmechanismus (38) in ihrer Höhe verstellbar wird.

14. Erntevorrichtung, nach Anspruch 12 oder Anspruch 13
**dadurch gekennzeichnet,**
**dass** mindestens ein Tragelement (35) winkelig an dem Rohrkörper angeordnet ist, wobei die Ährenstripperfinger (25) und/oder eine Abstreifer-Leiste direkt und/oder mittels mindestens eines Tragelementes (35) an dem Rohrkörper angeordnet sind.

15. Erntevorrichtung, nach einem der Ansprüche 12 bis 14,
**dadurch gekennzeichnet,**
**dass** die Ährenstripperfinger (25) in einer Schlitzform münden, welche in einem Radius mündet, und/oder eine nach unten gezogene Muldenform aufweisen und/oder gerade, gebogen oder C-förmig sind.

## Claims

1. A harvesting apparatus for harvesting cereal grains, rice, grains, seeds, or the like, said apparatus being operated as a front, side or rear attachement and comprising
- a crop stripper for determining a working width,
- an inclined chute (8),
- a threshing apparatus (3),
- a separation apparatus (5),
wherein the crop stripper generates a crop stripper rotor air stream, the inclined chute (8) has an edge facing the crop stripper and an edge facing away from the crop stripper that is arranged to lie lower than the edge facing the crop stripper and which is arranged between the threshing apparatus (3) and the separation apparatus (5), the threshing apparatus (3), and the separation apparatus (5) extend over a predominant part of the working width or over the entire working width,
**characterized in**
**that** the harvesting apparatus comprises a cleaning air channel (arrows), an airflow flows through the cleaning air channel for cleaning the crop (24) which also extends over the predominant part of the working width or over the entire working width and the crop stripper rotor air stream flows through the cleaning air channel.

2. The harvesting apparatus according to claim 1,
**characterized in**
**that** the chute (8) has fingers (9), is closed and/or at least partially perforated, and/or is an oscillating chute (8).

3. The harvesting apparatus according to claim 1 or claim 2,
**characterized in**
**that** the threshing apparatus (3) has beater strips and/or rubbing strips (4) and/or the separation apparatus (5) has a pre-separator (7) and a screening function for non-grain components and/or crop flow brake flaps (29).

4. The harvesting apparatus according to any one of the preceding claims,
**characterized in**
**that** the separation apparatus (5) has a separation apparatus adjustment mechanism (6), a foreign body collection recess (28), a pre-separator (7) and/or a grain spray guard (26).

5. The harvesting apparatus according to any one of the preceding claims,
**characterized in**
**that** the crop stripper has at least one rotor that is a tubular body and/or the threshing apparatus (3) has a tubular body.

6. The harvesting apparatus according to any one of the preceding claims,
**characterized in**
**that** the cleaning air channel has an blower device (13).

7. The harvesting apparatus according to claim 6,
**characterized in**
**that** the blower device (13) is adjustable in terms of its rotational speed and/or the cleaning air channel has at least one finger comb, at least one guide plate, at least one air guide flap (10), at least one screen (22) and/or at least one chute (32), and the screen (22) has a reciprocating /shaking movement rearwards.

8. The harvesting apparatus according to any one of the preceding claims,
**characterized in**
**that** the harvesting apparatus has a bulk material conveyor (11), a bulk material sump, a bunker unit, a cutting apparatus and/or a chopping apparatus (16), which extend over the predominant part of the working width or over the entirety of the working width.

9. The harvesting apparatus according to any one of the preceding claims,
**characterized in**
**that** a bunker unit has a bunker volume and/or a bulk material trough chute (32) that can be adjusted in terms of its inclination.

10. The harvesting apparatus according to any one of the preceding claims,
**characterized in**
**that** a crop stripper rotor (1), the threshing apparatus (3), the separation apparatus (5), blower device (13) and/or a bulk material conveyor (11) have at least one intermediate bearing (14) and/or the harvesting apparatus has crop dividers (15).

11. The harvesting apparatus according to any one of the preceding claims,
**characterized in**
**that** the harvesting apparatus has a running gear (18), skids (23), support wheels, a rotatable ring / pivoting frame (43) and/or a tow bar (27).

12. The harvesting apparatus according to any one of the preceding claims,
**characterized in**
**that** the crop stripper is a crop stripper with a nose hood (2) for harvesting cereal grains, rice, grains, seeds or the like, having at least one rotor, on which crop stripper fingers (25) and/or stripper strips, on which crop stripper fingers (25) are arranged, wherein the rotor or at least one of the rotors is a tubular body or a round tubular body.

13. The harvesting apparatus according to claim 12,
**characterized in**
**that** the nose hood (2, 44) is attached to square hood profiles (36) or tubes and/or the nose hood (2) becomes adjustable in height by telescoping arms (33) and ball bearings (34) that can rotate, and a lifting and lowering mechanism (38).

14. The harvesting apparatus according to claim 12 or claim 13,
**characterized in**
**that** at least one support element (35) is arranged on the tubular body at an angle, wherein the crop stripper fingers (25) and/or a stripper strip are arranged directly and/or by means of at least one support element (35) on the tubular body.

15. The harvesting apparatus according to claims 12 to 14,
**characterized in**
**that** the crop stripper fingers (25) end in a slit shape, which ends in a radius, and/or have a recessed shape that is drawn downward and/or are straight, bent or C-shaped.

## Revendications

1. Dispositif récolteur destiné à la récolte de céréales, de riz, de graines, de semences, ou similaires qui s'utilise en montage frontal, latéral ou arrière,
- muni d'un strippeur d'épis, lequel prédéfinit la largeur de travail,
- muni d'une glissière (8) inclinée,
- muni d'un dispositif batteur (3),
- muni d'un dispositif séparateur (5),
le strippeur d'épis générant un flux d'air de rotor de strippeur d'épis, la glissière (8) inclinée comportant un bord faisant face au strippeur d'épis et un bord opposé au strippeur d'épis qui est plus profond que le bord faisant face au strippeur d'épis et qui est placé entre le dispositif batteur (3) et le dispositif séparateur (5), le dispositif batteur (3) et le dispositif séparateur (5) s'étendant sur la majeure partie de la largeur de travail ou sur la totalité de la largeur de travail,
**caractérisé en ce**
**que** le strippeur pour nettoyer le produit récolté (24), le dispositif récolteur comprend un canal d'air de nettoyage traversé par un flux d'air (flèches), qui s'étend également sur la majeure partie de la largeur de travail ou sur la totalité de la largeur de travail, le flux d'air de rotor de strippeur d'épis s'écoulant à travers le canal d'air de nettoyage.

2. Dispositif récolteur selon la revendication 1,
**caractérisé en ce**
**que** la glissière (8) comporte des doigts (9), est fermée et/ou au moins partiellement perforée et/ou est une glissière (8) oscillante.

3. Dispositif récolteur selon la revendication 1 ou la revendication 2,
**caractérisé en ce**
**que** le dispositif batteur (3) comporte des battes de batteur et/ou de barres de friction (4) et/ou **en ce que** le dispositif séparateur (5) comporte avec un pré-séparateur (7) une fonction de tamisage pour les composants non céréaliers et/ou des clapets de freinage du flux de produits récoltés (29).

4. Dispositif récolteur selon l'une quelconque des revendications précédentes,
**caractérisé en ce**
**que** le dispositif séparateur (5) comporte un mécanisme d'ajustage du dispositif séparateur (6), une cuvette collectrice de corps étrangers (28), un pré-séparateur (7) et/ou une protection antiprojection de graines (26).

5. Dispositif récolteur selon l'une quelconque des revendications précédentes,
**caractérisé en ce**
**que** le strippeur d'épis comporte au moins un rotor, qui est un corps tubulaire et/ou **en ce que** le dispositif batteur (3) comporte un corps tubulaire.

6. Dispositif récolteur selon l'une quelconque des revendications précédentes,
**caractérisé en ce**
**que** le canal d'air de nettoyage comporte un générateur de flux d'air (13).

7. Dispositif récolteur selon la revendication 6,
**caractérisé en ce**
**que** le générateur de flux d'air (13) est à vitesse de rotation réglable et/ou **en ce que** le canal d'air de nettoyage comporte au moins un peigne à doigts, au moins un déflecteur, au moins un volet de guidage d'air (10), au moins un tamis (22) et/ou au moins une glissière (32) et **en ce que** le tamis (22) effectue un mouvement réciproque / par secousses vers.

8. Dispositif récolteur selon l'une quelconque des revendications précédentes,
**caractérisé en ce**
**que** le dispositif récolteur comporte un convoyeur de produits en vrac (11), une cuve de produits en vrac, une unité bunker, un dispositif de coupe et/ou ou de broyage (16), qui s'étendent sur la majeure partie ou sur la totalité de la largeur de travail.

9. Dispositif récolteur selon l'une quelconque des revendications précédentes,
**caractérisé en ce**
**qu'**une unité bunker présente un volume de bunker et/ou une glissière de produits en vrac (32) à inclinaison réglable.

10. Dispositif récolteur selon l'une quelconque des revendications précédentes,
**caractérisé en ce**
**qu'**un rotor de strippeur d'épis (1), le dispositif batteur (3), le dispositif séparateur (5), un générateur de flux d'air (13) et/ou un convoyeur de produits en vrac (11) comportent au moins un palier intermédiaire (14) et/ou **en ce que** le dispositif récolteur comporte des diviseurs de récolte (15).

11. Dispositif récolteur selon l'une quelconque des revendications précédentes,
**caractérisé en ce**
**que** le dispositif récolteur comporte un châssis (18), des patins (23), des roues porteuses, un cadre pivotant/une couronne rotative (43) et/ou un timon d'attelage (27).

12. Dispositif récolteur selon l'une quelconque des revendications précédentes,
**caractérisé en ce**
**que** le strippeur d'épis est un strippeur d'épis pourvu d'un capot avant (2) destiné à la récolte de céréales, de riz, de graines, de semences, ou similaires, avec au moins un rotor, sur le doigt du strippeur d'épis (25) et/ou des barres de stripage, sur lesquelles sont placés des doigts strippeurs d'épis (25) le rotor ou au moins l'un des rotors étant un corps tubulaire ou un corps tubulaire rond.

13. Dispositif récolteur selon la revendication 12,
**caractérisé en ce**
**que** le capot avant (2, 44) est fixé sur des profilés carrés de capot (36) ou sur des tubes et/ou **en ce que** le capot avant (2) est réglable en hauteur au moyen de bras télescopiques (33) et de roulements à billes (34) rotatifs et d'un mécanisme de levage et d'abaissement (38).

14. Dispositif récolteur selon la revendication 12 ou la revendication 13,
**caractérisé en ce**
**qu'**au moins un élément porteur (35) est placé de manière angulaire sur le corps tubulaire, les doigts strippeurs d'épis (25) et/ou une baguette dévêtisseuse étant placés directement et/ou au moyen d'au moins un élément porteur (35) sur le corps tubulaire.

15. Dispositif récolteur selon l'une quelconque des revendications 12 à 14,
**caractérisé en ce**
**que** les doigts strippeurs d'épis (25) débouchent sous une forme de fente, laquelle débouche dans un rayon, et/ou présentent la forme d'un creux tiré vers le bas et/ou sont rectilignes, incurvés ou en forme de C.
